# NEUE EUROPÄISCHE PATENTSCHRIFT

(11) **EP 0 330 737 B2**
(45) Veröffentlichungstag und Bekanntmachung des Hinweises auf die Entscheidung über den Einspruch: **19.03.1997**
(45) Hinweis auf die Patenterteilung: 12.10.1994
(21) Anmeldenummer: 88119060.7
(22) Anmeldetag: 17.11.1988
(51) Int. Cl.: H04Q 1/10, H05K 7/00, F21V 8/00

(54) **Schutzkappe für ein Wandgehäuse einer Fernmeldeanlage**
Protecting cover for a wall-mounted cabinet of a telephone installation
Couvercle de protection pour un coffret mural d'une installation téléphonique

(30) Priorität: 27.02.1988 DE 3806268
(43) Veröffentlichungstag der Anmeldung: 06.09.1989
(73) Patentinhaber: TELENORMA GMBH, 60326 Frankfurt am Main (DE)
(72) Erfinder: Geppert, Fritz, D-6352 Ober-Mörlen (DE); Girscher, Wolfgang, D-6000 Frankfurt/Main (DE)

(56) Entgegenhaltungen:
- DE-A- 1 616 022
- DE-A- 2 846 825
- DE-U- 1 720 754
- DE-U- 8 611 144
- US-A- 4 576 436

## Beschreibung

Die Erfindung betrifft eine Schutzkappe für ein einen oder mehrere Baugruppenrahmen zur Aufnahme von als Leiterplatte ausgebildeten Baugruppen enthaltendes Wandgehäuse einer Fernmeldeanlage.

Eine derartige Schutzkappe ist bereits bekannt. So wird in der DE-OS 28 46 825 eine Wandzentrale für Fernsprechanlagen beschrieben, bei welcher auf eine an der Wand befestigte Grundplatte als Baugruppenrahmen ausgebildete Bauteileträger aufgesetzt werden. Die Abdeckung des Bauteileträgers, erfolgt durch einen U-förmigen Blechmantel. Der Bauteileträger dient zur Aufnahme von Baugruppen in Form von Leiterplatten, die in den Baugruppenrahmen desselben eingeschoben werden. Die Leiterplatten tragen bekanntlich die Bauelemente der in dem Wandgehäuse untergebrachten Einrichtung.

Zur Signalisierung von Betriebszuständen oder zur Anzeige von Alarmmeldungen werden an der Stirnseite der Leiterplatten Signallichtquellen, beispielsweise in Form von Leuchtdioden angebracht. In der DE-OS 26 57 732 wird eine Frontplatte mit Einbauelementen für Leiterplatten beschrieben, welche u. a. ein Feld für Signallichtquellen aufweist, die elektrisch mit der Leiterplatte verbunden sind.

Sollen nun derartige Signallichtquellen auf Leiterplatten untergebracht werden, die in einem eingangs beschriebenen Wandgehäuse untergebracht sind, so sind hierfür besondere Maßnahmen an der Schutzkappe zu treffen, wenn die Signallichtquellen auch bei aufgesetzter Schutzkappe sichtbar sein sollen. Die einfachste Lösung könnte darin bestehen, die Schutzkappe an der betreffenden Stelle mit einem entsprechenden Fenster zu versehen. Die Aufgabe der vorliegenden Erfindung besteht nun darin, eine Schutzkappe derart auszubilden, daß auf eine besondere Frontplatte mit Einbauelementen bei den Leiterplatten verzichtet werden kann.

Diese Aufgabe wird dadurch gelöst, daß die Schutzkappe mehrere Öffnungen aufweist, durch die jeweils ein Lichtleitstab führbar is, welcher bis zu einer im Bereich der Frontseite auf der Bestückungsseite der Leiterplatte angebrachten Signallichtquelle reicht, und daß mehrere Lichtleitstäbe durch Verbindungs stege miteinander verbunden sind.

Durch den Lichtleitstab kann die Signallichtquelle wie die übrigen Bauelemente auf der Bestückungsseite der Leiterplatte angebracht werden, wobei das Licht der Signalquelle infolge des Lichtleitstabes auch bei einer schrägen Betrachtung der Schutzkappe sichtbar ist, was bei einem Fenster in der Schutzkappe nicht unbedingt möglich sein muß, wenn die Signallichtquelle durch eine benachbarte Leiterplatte verdeckt wird.

In der DE-OS 1 616 022 wird ein Farbmelder für Schalttafelfelder beschrieben, bei welchem zwischen dem Schalttafelfeld und einer Signalglühlampe ein Lichtleiter angeordnet ist, um Schäden am Baustein oder an der Glühlampe infolge der Wärmeabstrahlung der Glühlampe zu vermeiden. Auf welche Weise die Glühlampe hinter der Schalttafel angebracht ist, läßt sich der genannten Druckschrift nicht entnehmen.

Eine Weiterbildung der Erfindung besteht auch darin, daß der Lichtleitstab in Höhe der Signallichtquelle prismenförmig ausgebildet ist.

Durch diese Maßnahme wird eine Bündelung des Lichts der Lichtsignalquelle erreicht.

Eine vorteilhafte Weiterbildung der Erfindung besteht auch darin, daß der in der Öffnung befindliche Teil des Lichtleitstabs zylinderförmig ausgebildet ist und daß dessen linsenförmiges Ende mit der Außenseite der Schutzkappe abschließt

Durch diese Maßnahme wird die Sichtbarkeit des Lichts der Signallichtquelle noch weiter verbessert.

Weitere Vorteile ergeben sich aus den Unteransprüchen.

Die Erfindung wird anhand eines Ausführungsbeispiels näher erläutert, welches in der Zeichnung dargestellt ist.

Es zeigt:

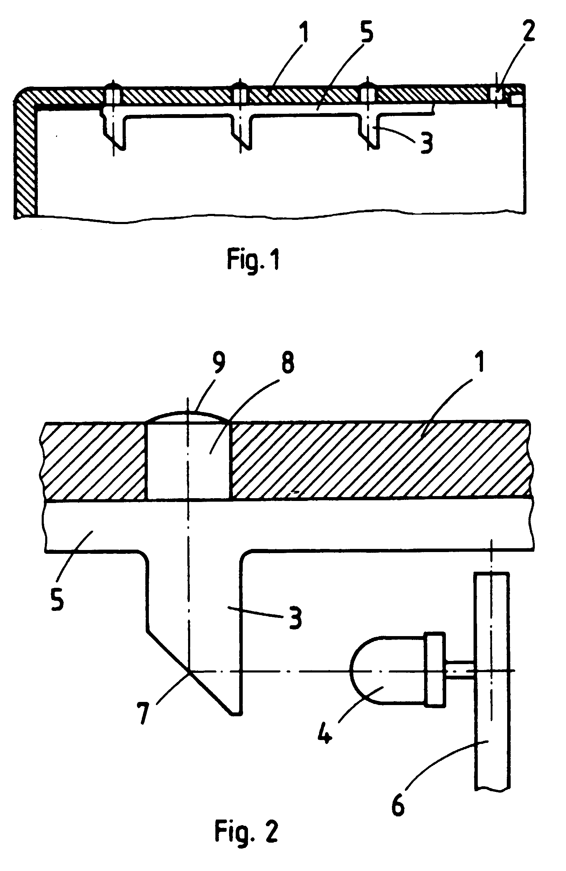

- Fig. 1: einen Schnitt durch die Schutzkappe mit der Anordnung mehrerer Lichtleitstäbe und
- Fig. 2: den Aufbau eines Lichtleitstabes in Verbindung mit der dazugehörigen Signallichtquelle.

Die Schutzkappe 1 weist zylinderförmige Öffnungen 2 auf, welche den zylinderförmigen Teil 8 des Lichtleitstabes 3 aufnehmen. Der zylinderförmige Teil 8 des Lichtleitstabes 3 schließt mit der Oberseite des Gehäuses 1 ab und weist eine dieselbe überragende Linse 9 auf. Der Lichtleitstab 3 ist an seinem anderen Ende prismenförmig ausgebildet und mit einer Reflektionsfläche 7 versehen. Die Reflektionsfläche lenkt den von der Lichtsignalquelle ausgehenden Lichtstrahl um 90 Grad ab, so daß er in derAchse des zylinderförmigen Teils 8 des Lichtleitstabs 3 verläuft. Die Lichtsignalquelle 4 ist, beispielsweise in Form einer Leuchtdiode auf der Bestückungsseite im Bereich der Frontseite der Leiterplatte 6 angebracht. Sie wird in der gleichen Weise und im gleichen Bestückungsvorgang wie die übrigen Bauteile auf die Leiterplatte 6 aufgesetzt und anschließend verlötet. Weder der Abstand zwischen dem Lichtleitstab 3 und der auf der Leiterplatte 6 angebrachten Lichtsignalquelle noch die Lage der Lichtsignalquelle 4 zur Reflektionsfläche 7 ist problematisch und muß genau eingehalten werden, so daß die üblichen Toleranzen zwischen der Schutzkappe 1 und der Leiterplatte 6 keinen Einfluß auf die Übertragungswirkung des Lichtleitstabes 3 haben, besonders wenn dieser etwas breiter als der Durchmesser des zylinderförmigen Teils 8 ausgebildet ist. Durch die Umlenkung des Lichtstrahls der Lichtsignalquelle mittels der Reflektionsfläche 7 ist es möglich, mehrere Lichtleitstäbe 3 durch entsprechende Verbindungsstege 5 miteinander zu verbinden, wobei die Lichtleitstäbe 3 und die Verbindungsstäbe 5 aus dem gleichen durchsichtigen oder durchscheinenden Material in einem Spritzvorgang hergestellt werden können, da durch die Lichtstrahlumlenkung keine Übertragung von Lichtstrahlen von einem Lichtleitstab 3 zu einem anderen Lichtleitstab 3 über einen Verbindungssteg 5 erfolgen kann. Zur optischen Verbesserung kann sowohl die Reflektionsfläche 7 als auch die Linse 9 vor dem Einbau in die Schutzkappe 1 poliert werden. Die Befestigung der Lichtleitstäbe 3 und der Verbindungsstege 5 an der Schutzkappe 1 kann durch Verkleben erfolgen.

## Patentansprüche

1. Schutzkappe für ein einen oder mehrere Baugruppenrahmen zur Aufnahme von als Leiterplatten ausgebildeten Baugruppen enthaltendes Wandgehäuse einer Fernmeldeanlage, dadurch gekennzeichnet, daß die Schutzkappe (1) mehrere Öffnungen (2) aufweist, durch die jeweils ein Lichtleitstab (3) führbar ist, der bis zu einer, im Bereich der Frontseite auf der Bestückungsseite der Leiterplatte (6) angebrachten Signallichtquelle (4) reicht, und daß mehrere Lichtleitstäbe (3) durch Verbindungsstege (5) miteinander verbunden sind.

2. Schutzkappe nach Anspruch 1 dadurch gekennzeichnet, daß der jeweilige Lichtleitstab (3) in Höhe der Signallichtquelle (4) prismenförmig ausgebildet ist.

3. Schutzkappe nach einem der Ansprüche 1 oder 2, dadurch gekennzeichnet, daß die Öffnungen (2) in der Schutzkappe (1) zylinderförmig ausgebildet sind.

4. Schutzkappe nach einem der Ansprüche 1 bis 3, dadurch gekennzeichnet, daß der durch die jeweilige Öffnung (2) führbare Teil des jeweiligen Lichtleitstabes (3) zylinderförmig ausgebildet ist und daß dessen linsenförmiges Ende (9) mit der Außenseite der Schutzkappe (1) abschließt.

5. Schutzkappe nach einem der Ansprüche 1 bis 4, dadurch gekennzeichnet, daß die Lichtleitstäbe (3) und die Verbindungsstege (5) einstückig in einem Spritzvorgang hergestellt werden.

6. Schutzkappe nach einem der Ansprüche 1 bis 5, dadurch gekennzeichnet, daß die Lichtleitstäbe (3) mit der Schutzkappe (1) verklebt sind.

7. Schutzkappe nach einem der Ansprüche 2 oder 4, dadurch gekennzeichnet, daß das linsenförmige Ende (9) und die Reflexionsfläche (7) des prismenförmigen Teils des Lichtleitstabs (3) poliert sind.

## Claims

1. Protective cover for a wall cabinet, which contains one or more subassembly frames for reception of subassemblies constructed as circuitboards, of a telecommunications installation, characterised thereby that the protective cover (1) has several openings (2) through each of which a respective optically-conductive rod (3), which reaches up to a signalling light source (4) mounted in the region of the front side on the component side of the circuitboard (6), is guidable, and that several optically-conductive rods (3) are connected together by connecting webs (5).

2. Protective cover according to claim 1, characterised thereby that the respective optically-conductive rod (3) is constructed to be prismatic at the level of the signalling light source (4).

3. Protective cover according to one of claims 1 and 2, characterised thereby that the openings (2) in the protective cover (1) are constructed to be cylindrical.

4. Protective cover according to one of claims 1 to 3, characterised thereby that the part of the optically-conductive rod (3) guidable through the respective opening (2) is constructed to be cylindrical and that the lens-shaped end (9) thereof is flush with the exterior side of the protective cover (1).

5. Protective cover according to one of claims 2 to 4, characterised thereby that the optically-conductive rods (3) and the connecting webs (5) are integrally produced in an injection moulding process.

6. Protective cover according to one of claims 1 to 5, characterised thereby that the optically-conductive rods (3) are glued to the protective cover (1)

7. Protective cover according to one of claims 2 and 4, characterised thereby that the lens-shaped end (9) and the reflecting face (7) of the prismatic part of the optically-conductive rod (3) are polished.

## Revendications

1. Couvercle de protection pour un coffret mural d'installation téléphonique contenant un ou plusieurs châssis de réception d'ensembles en pièces détachées réalisés sous forme de cartes imprimées, caractérisé en ce que le couvercle de protection (1) présente plusieurs ouvertures (2) au travers desquelles peut être introduit chaque fois un barreau conducteur de lumière (3) qui s'étend du côté de sa face avant, jusqu'à une source (4) de signaux lumineux installée sur le côté des équipements de la carte imprimée (6), et en ce que plusieurs barreaux conducteurs de lumière (3) sont reliés les uns aux autres par l'intermédiaire de traverses (5) de liaison.

2. Couvercle de protection selon la revendication 1, caractérisé en ce que le barreau conducteur de lumière (3) en question est réalisé sous forme prismatique à hauteur de la source (4) de signaux lumineux.

3. Couvercle de protection selon la revendication 1 ou 2, caractérisé en ce que les ouvertures (2) du couvercle de protection (1) sont réalisées sous forme cylindrique.

4. Couvercle de protection selon l'une des revendications 1 ou 3, caractérisé en ce que la partie dudit barreau conducteur de lumière (3) pouvant être introduite dans ladite ouverture (2) est réalisée sous forme cylindrique et en ce que son extrémité (9) lenticulaire se termine du côté extérieur du couvercle (1).

5. Couvercle de protection selon l'une des revendications 1 à 4, caractérisé en ce que les barreaux conducteurs de lumière (3) et les traverses (5) de liaison sont réalisés de façon monobloc au cours d'un processus d'injection.

6. Couvercle de protection selon l'une des revendications 1 à 5, caractérisé en ce que les barreaux conducteurs de lumière (3) sont collés au couvercle de protection (1).

7. Couvercle de protection selon l'une des revendications 2 ou 4, caractérisé en ce que l'extrémité (9) lenticulaire du barreau conducteur de lumière (3) et la surface (7) de réflexion de sa partie prismatique sont polies.
